# EUROPEAN PATENT SPECIFICATION

(11) **EP 1 133 725 B1**
(45) Date of publication and mention of the grant of the patent: **26.01.2011**
(21) Application number: 99972320.8
(22) Date of filing: 12.11.1999
(51) Int. Cl.: G06F 9/38

(54) **A job parallel processing system for a service network**
Verarbeitungssystem für parallele Jobs in einem Dienstenetz
Système de traitement des travaux parallèles dans un réseau de service

(30) Priority: 16.11.1998 SE 9803901
(43) Date of publication of application: 19.09.2001
(73) Proprietor: Telefonaktiebolaget LM Ericsson (publ), 164 83 Stockholm (SE)
(72) Inventor: HOLMBERG, Per, Anders, S-118 42 Stockholm (SE); KLING, Lars-Örjan, S-151 52 Södertälje (SE); JOHNSON, Sten, Edward, S-123 42 Farsta (SE); EGELAND, Terje, S-139 56 Värmdö (SE)
(74) Representative: Hedman, Anders
(86) International application number: PCT/SE1999/002060
(87) International publication number: WO 2000/029939

(56) References cited:
- WO-A-97/22927
- WO-A1-99/31589
- US-A- 5 072 364
- US-A- 5 287 467
- US-A- 5 511 172
- US-A- 5 812 839
- US-A- 5 848 257
- JEFFERY OPLINGER ET AL: "Software and Hardware for Exploiting Speculative Parallelism with a Multiprocessor" INTERNET CITATION XP002446048 Retrieved from the Internet: URL:Technical Report CSL-TR-97-715, Stanford University Computer Systems Lab [retrieved on 2007-08-08]

## Description

### TECHNICAL FIELD OF THE INVENTION

The present invention relates to processing systems, and especially processors for service networks such as telecommunication networks.

### BACKGROUND OF THE INVENTION

With the ever-increasing demand for improved service in service networks comes the need for processors that offer increased capacity and additional functionality. In telecommunication networks for example, more and more processor capacity is required for several reasons:
- the number of calls and call set-ups increases;
- new types of call set-ups, such as for mobile communications and ISDN, require more processing capacity than ordinary call set-ups;
- the processing resources become more and more distributed in the networks, requiring increased inter-processor communication and hence more processing capacity;
- the number of additional services, such as intelligent network services and ISDN-services, increases.

The conventional approach for increasing the processing capacity of processors in service networks normally relies on the use of higher and higher clock frequencies to increase the processing speed, faster memories and instruction pipelining.

### RELATED ART

The article Multiscalar Processors by Sohi, Breach and Vijaykumar, 22nd Annual International Symposium on Computer Architecture, Santa Margherita, Ligure, Italy (1995) describes a so-called multiscalar processor, which is used for obtaining instruction level parallelism for ordinary high-level programs by speculative task execution. In a multiscalar processor with several processing units, multiple tasks can execute in parallel on the processing units, resulting in an aggregate execution rate of multiple instructions per cycle. <Insert page 2a>

### SUMMARY OF THE INVENTION

It is a general object of the invention to provide an event-driven processing system that operates as a job-parallel processor exploiting parallelism on job-level.

It is another object of the present invention to provide a service network processor, which offers parallel execution of jobs that form part of substantially independent services requested by users connected to the service network.

Another object of the invention is to provide means for checking for possible dependencies between the jobs that are executed in parallel, and to enable efficient restart of jobs that have been flushed due to detected dependencies.

Yet another object of the invention is to provide a processing system which has a simple and efficient interface between the scheduling of the jobs and the parallel execution of the jobs.

These and other objects are met by the invention as defined by the accompanying patent claims.

According to a general inventive concept, job-level parallelism is exploited by means of speculative execution of jobs.

The article "Software and Hardware for Exploiting Speculative Parallelism with a Multiprocessor", by Oplinger et al. from Stanford University Computer Systems Lab, February 1997, relates to the exploitation of speculative parallelism with a multiprocessor by using a fully automated compiler system. Thread-level speculation (TLS) makes it possible to parallelize general purpose C programs, and makes it feasible to find speculative doacross parallelism in outer loops that can greatly improve the performance of general-purpose applications. However, exploiting speculative thread-level parallelism on a multiprocessor requires the compiler to determine where to speculate, and to generate SPMD (single program multiple data) code. A fully automated compiler system uses profile information to determine the best loops to execute speculatively, and to generate the synchronization code that improves the performance of speculative execution.

WO 97/22927 A discloses a processing system for processing multiple jobs. A job is described by a corresponding job signal, which at least comprises a pointer to the first instruction of the job. The processing system comprises a job scheduler which schedules incoming user requests to process jobs by storing the corresponding job signals into a job signal queue. A single processing unit then executes the jobs corresponding to the job signals in the job signal queue.

Preferably, the processor and processing system according to the invention are developed and customized for service networks such as telecommunication networks, in which a plurality of users connected to the network request various services from the network. The service requests are typically regarded as external events that are asynchronous to the actual processing within the processing system. In this sense the processing system is event-based or event-driven, where each external event initiates one or more jobs to be executed by the processing system.

According to the invention, a processor for a service network involves a job queue for storing job signals corresponding to jobs that form part of substantially independent services requested by the users of the service network, and a number of parallel processing units for independently fetching and processing job signals from the job queue to execute different jobs in parallel. As a number of the parallel jobs are executed speculatively, a unit for checking for possible dependencies between the executed jobs is incorporated. If a dependency is detected for a speculatively executed job, that job is flushed. To ensure prompt and proper service for the users of the service network, flushed jobs are quickly restarted directly from the job queue.

The process of scheduling jobs is separated from the parallel execution of jobs by providing a dedicated processor for scheduling. Consequently, a processing system according to the invention comprises a first processor which incorporates a scheduling unit, and a second processor in the form of the job-parallel processor. This solution gives a simple and efficient interface between the parallel job execution and the scheduling process. It is no longer necessary to keep track of in which one of the parallel processing units that the scheduling should be executed since the job scheduling is performed in the processor dedicated for scheduling. Besides, the job-parallel processor and the scheduling processor can operate in parallel, thus performing the overall processing of jobs in the processing system faster.

The invention offers the following advantages:
- Increased processing capacity;
- Quick and efficient restart of dependency-flushed jobs directly from the job queue; and
- A simple and efficient interface between job execution and scheduling.

Other advantages offered by the present invention will be appreciated upon reading of the below description of the embodiments of the invention.

### BRIEF DESCRIPTION OF THE DRAWINGS

The invention, together with further objects and advantages thereof, will be best understood by reference to the following description taken together with the accompanying drawings, in which:
Fig. 1 is a schematic diagram of an illustrative service network;
Fig. 2 is a schematic diagram of a processing system according to the invention;
Fig. 3 is a schematic diagram of pertinent parts of the processor of Fig. 2;
Fig. 4 is a schematic diagram of execution pipelines and circuitry for dependency-checking according to an alternative embodiment of the invention; and
Fig. 5 is a schematic logical view of an execution pipeline according to the invention.

### DETAILED DESCRIPTION OF EMBODIMENTS OF THE INVENTION

Throughout the drawings, the same reference characters will be used for corresponding or similar elements.

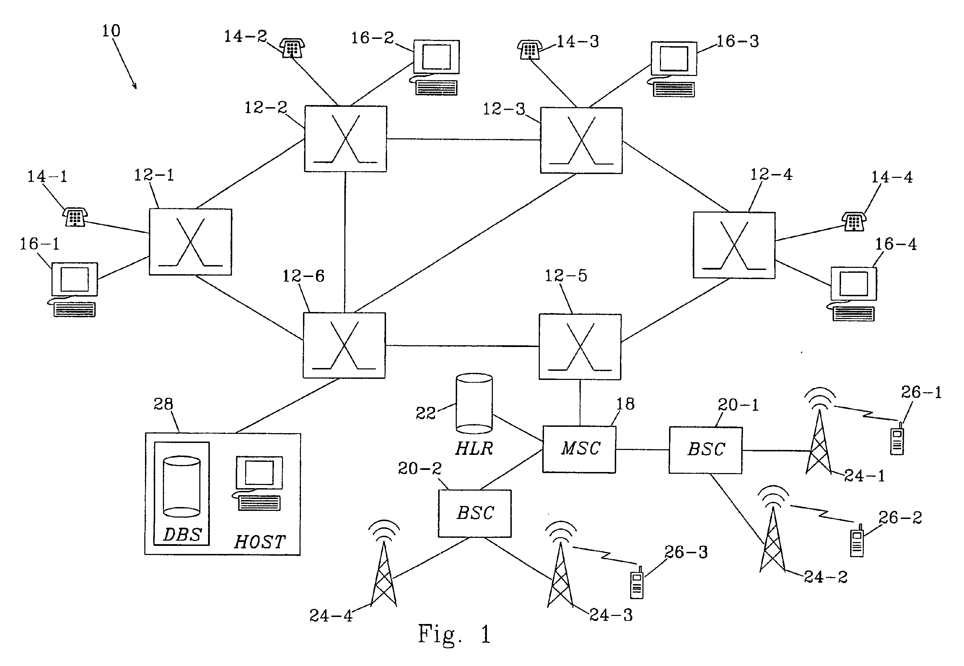

Fig. 1 is a schematic diagram of an illustrative service network. In the example of Fig. 1, the service network 10 is a telecommunication network. The telecommunication network 10 supports different bearer service networks such as PSTN (Public Switched Telephone Network), PLMN (Public Land Mobile Network), ISDN (Integrated Services Digital Network) and ATM (Asynchronous Transfer Mode) networks. The telecommunication network 10 basically comprises a number of switching/ routing nodes 12-1 to 12-6 interconnected by physical links that are normally grouped into trunk groups. The switching nodes 12-1 to 12-4 have access points to which access terminals, such as telephones 14-1 to 14-4 and computers 16-1 to 16-4, are connected via local exchanges (not shown). The switching node 12-5 is connected to a Mobile Switching Center (MSC) 18. The MSC 18 is connected to two Base Station Controllers (BSCs) 20-1 and 20-2, and a Home Location Register (HLR) node 22. The first BSC 20-1 is connected to a number of base stations 24-1 and 24-2 communicating with one or more mobile units 26-1 and 26-2. Similarly, the second BSC 20-2 is connected to a number of base stations 24-3 and 24-4 communicating with one or more mobile units 26-3. The switching node 12-6 is connected to a host computer 28 provided with a data base system (DBS). User terminals connected to the network 10, such as the computers 16-1 to 16-4, are operable to request data base services from the data base system in the host computer 28. Servers such as Java servers may be connected to the switching/routing nodes. Private networks such as business networks (not shown) may also be connected to the service network of Fig. 1.

The service network of Fig. 1 provides various services to the users connected to the network. Examples of such services are ordinary telephone calls in PSTN and PLMN, message services, LAN interconnects, Intelligent Network (IN) services, ISDN services, CTI (Computer Telephony Integration) services, video conferences, file transfers, access to the so-called Internet, paging services, video-on-demand and so on.

Each switching node 12 in the network 10 is normally provided with a processing system (not shown in Fig. 1) which handles the service requests. Such a processing system is normally also arranged in each one of the MSC 18, the BSCs 20-1 and 20-2, the HLR node 22 and the host computer 28 of the network 10, as well as in servers connected to the network. A call set-up for example requires the processing system to execute a sequence of jobs. This sequence of jobs defines the call set-up service on the processor level. Each call set-up service requires a similar sequence of jobs to be executed by the processor. In fact, each service requested by the users of the service network requires a specific sequence of jobs. The service requests by the users of the network can be regarded as events, which are represented by job signals. In this sense, the processing in the processing system is event-driven, where the events automatically and dynamically defines the jobs that correspond to the requested services.

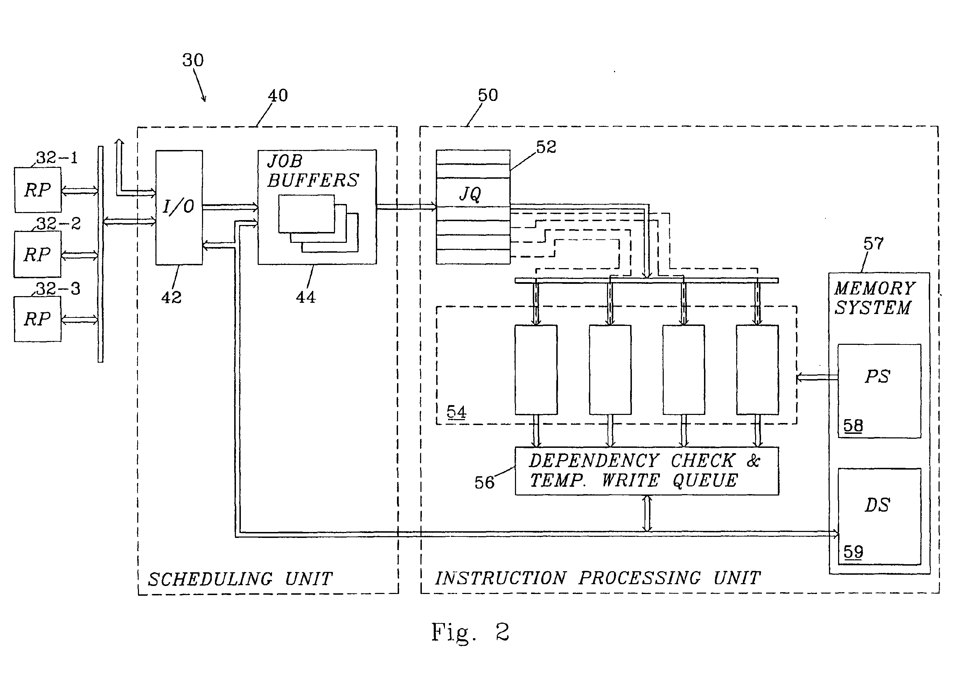

Fig. 2 is a schematic diagram of an illustrative example of a processing system according to the invention. The processing system 30 is customized for use in a service network such as that illustrated in Fig. 1. The processing system 30 is a hierarchical processing system and basically comprises a number of regional processors (RP) 32-1 to 32-3, a scheduling unit 40 and an instruction processing unit (IPU) 50.

The scheduling unit 40 receives job signals corresponding to jobs that form part of services requested by users of the service network from one or more of the regional processors 32-1 to 32-3 or from peripherals and other processors in the service network. Because of the huge number of services requested in a service network, the jobs received by the processing system 30 in a service network will be substantially independent, although job dependencies may occur.

In this particular realization example, the scheduling unit 40 comprises an input/output unit 42 and a number of job buffers 44. The input/output unit 42 receives the job signals from the RPs 32-1 to 32-3 and other peripherals and distributes them to the job buffers 44. By using several job buffers, instead of just one, it is possible to handle priorities; job signals with different priority levels are stored in different buffers. When a new job signal arrives to the scheduling unit 40 it is analyzed and the job buffer into which the job signal should be placed is identified. Next, the job signal is placed in the selected job buffer where it awaits to be forwarded to the instruction processing unit 50. The job buffers 44 are normally organized as first-in-first-out queues, and the job buffers are served in order of priority. When the IPU 50 can accept a new job signal, the scheduling unit 40 takes a signal of the highest priority from the job buffers 44 and sends it to the IPU 50.

The instruction processing unit (IPU) 50 forms a processor, which comprises a job signal queue (JQ) 52, a plurality of processing units 54, a combined dependency checking unit and temporary write queue 56 for handling data dependencies and a memory system 57 divided into a program store 58 and a data store 59. Preferably, the processing units 54 are in the form of execution pipelines. In the following, the processing units will therefore be referred to as execution pipelines, and the job signal queue will simply be referred to as the job queue.

The job signals from the scheduling unit 40 are buffered in the job queue 52, which has a number of storage positions for storing the job signals. Each job signal is stored together with additional information in a respective storage position in the job queue 52. The job signals that are buffered in the job queue 52 generally correspond to jobs that form part of substantially independent network services. In general, each job signal comprises a header and body. In addition to administrative information, the header normally includes a pointer to software code in the program store 58, and the body of the job signal includes input operands necessary for execution of the corresponding job. In this sense, the job signal is self-contained or autonomous, completely defining the corresponding job. Preferably, the software code is pointed out via one or more table look-ups. This generally means that the pointer actually points to a look-up table entry, which in turn points to the software code. The body could be a signal message from a regional processor or another processor in the service network. A job may be defined as the instruction stream specified by the signal header and the job starts with the reception of the job signal and ends by the calling of an end-job routine. It should however be noted that the job signal itself does not include any instructions, only a pointer to instructions in the program code stored in the program store 58, and operands required in the execution of the instructions.

The execution pipelines 54 independently "fetch" job signals from different storage positions in the job queue 52 to independently execute different jobs in parallel, as indicated in Fig. 2 by the dashed lines from storage positions in the job queue 52 to the execution pipelines 54. Whenever an execution pipeline is free to start executing a new job, the job queue 52 is examined to find an unallocated job signal, and the unallocated job signal is assigned to the execution pipeline. The job signal is copied from the job queue into the execution pipeline and processed therein to execute the corresponding job. In this particular example, four pipelines execute four different jobs in parallel, independently of each other. At all times during parallel job execution, only one job signal in the job queue 52 is in commit position, allowing the execution pipeline to which the job signal is assigned to perform write-back to the memory system 57 and commit signal sendings. Jobs in the other execution pipelines are executed speculatively and may be flushed if a data dependency is detected by the dependency checking unit 56.

A general requirement for systems where the information flow is governed by protocols is that certain related events must be processed in the received order. This is the invariant of the system, no matter how the system is implemented. The commit order between jobs is normally defined by the arrival to the processing core and will generally not be changed. However, in a processing system handling job signals of different priority levels, it may be useful to put a job signal of higher priority level before job signals of lower priority. In general, jobs within the same priority level are committed in the same order as they arrived.

It should be understood that the execution pipelines 54 does not generally fetch job signals from the job queue in a synchronous manner, nor is the parallel execution of jobs in the pipelines synchronous. However, the fetching of jobs by the pipelines can still be regarded as substantially parallel.

The dependency checking unit 56 is generally implemented by using one or more read buffers associated with the execution pipelines 54. When a pipeline fetches data from the data store 59, the read address or addresses are buffered in the read buffer(s). When the pipeline with commit priority writes to the data store 59, the write address to the data store is compared to the read addresses in the read buffer(s) to see if there are data dependencies between the jobs. If data read by a speculatively executing job is subsequently modified by the committed job, a data dependency exists and the speculatively executed job has to be flushed and restarted. The flushed job can be restarted directly from the job queue 52 since the job signal that corresponds to the flushed job is still buffered in the job queue. Job signals corresponding to jobs that have been committed are removed from the job queue 52, thereby allowing new job signals from the scheduling unit 40 to be buffered in the job queue 52.

Data store modifications proposed by a speculatively executed job are logged in the temporary write queue 56, but not written into the data store 59 until the job gets commit priority. When a job gets commit priority, the entries in the temporary write queue 56 that belong to the job in question are immediately written into the data store 59. Job signals generated by a job with commit priority are forwarded to the scheduling unit 40, where the job signals are directed either to the job buffers awaiting later processing or sent to the I/O-unit 42 to be distributed to a regional processor or another processing system in the service network.

An example of a specific type of dependency checking unit and temporary write queue is disclosed in the international patent application WO 88/02513. The international patent application WO 88/02513 generally describes a method and device to execute two instruction sequences in an order determined in advance. Both instruction sequences are executed in parallel without having to begin by taking notice of the determined order. To ensure the predetermined order it is necessary to prevent that data obtained due to writes associated with the second sequence is transferred to the main memory during the execution of the first sequence. The dependence of the second sequence on the first sequence is monitored by a dependency checking unit and the prescribed order is ensured by an intermediate storage unit which includes an auxiliary memory and comparison circuits.

The patent application WO 88/02513 is not at all concerned with job signals. Instead it directly considers instruction sequences. There is no evidence of a job queue in which job signals corresponding to jobs that form part of services requested by users of a service network are buffered, nor is there any suggestion of such a job queue. Consequently, the interaction between the execution pipelines and the job queue as proposed by the present invention is not disclosed in WO 88/02513. In the patent application WO 88/02513, it says that the second instruction sequence is restarted at the detection of a dependency. However, there is no disclosure of how to restart the sequence.

The memory system 57 advantageously uses both instruction level cache and data level cache memories (not shown) to allow relatively fast access to the instructions and data that currently reside in the cache memories (previously copied from the main memory). The use of cache memories minimizes the need to access the main memory.

The scheduling unit 40 and the IPU 50 may be arranged on the same circuit board and implemented in a single processing unit. Preferably however, the scheduling process is separated from the parallel execution of jobs by providing a dedicated processor for scheduling. The scheduling unit 40 is implemented in a first processor separate from a second processor, which incorporates the instruction processing unit 50. This gives a simple and clear interface between the parallel job execution and the scheduling process. It is not necessary to keep track of in which execution pipe that the scheduling should be executed since the complete scheduling process is performed in the first processor, which is dedicated for scheduling of jobs.

An example of a specific type of scheduling unit is the signal processing unit (SPU) in the Ericsson AXE Digital Switching Systems. Advantageously, the interrupt handling in the scheduling unit 40 used by the invention is capable of initiating an interrupt of jobs in the IPU 50 if a job signal of higher priority level is sent from the scheduling unit 40 to the IPU 50. Preferably, although not necessarily, the job queue 52 in the IPU 50 contains job signals of only one priority level at a time. Signals of higher priority levels from the scheduling unit 40 will interrupt jobs of lower levels in the IPU. The scheduling unit 40 initiates an interrupt by sending an interrupt request to the IPU 50, and the IPU 50 will then interrupt the currently executing jobs.

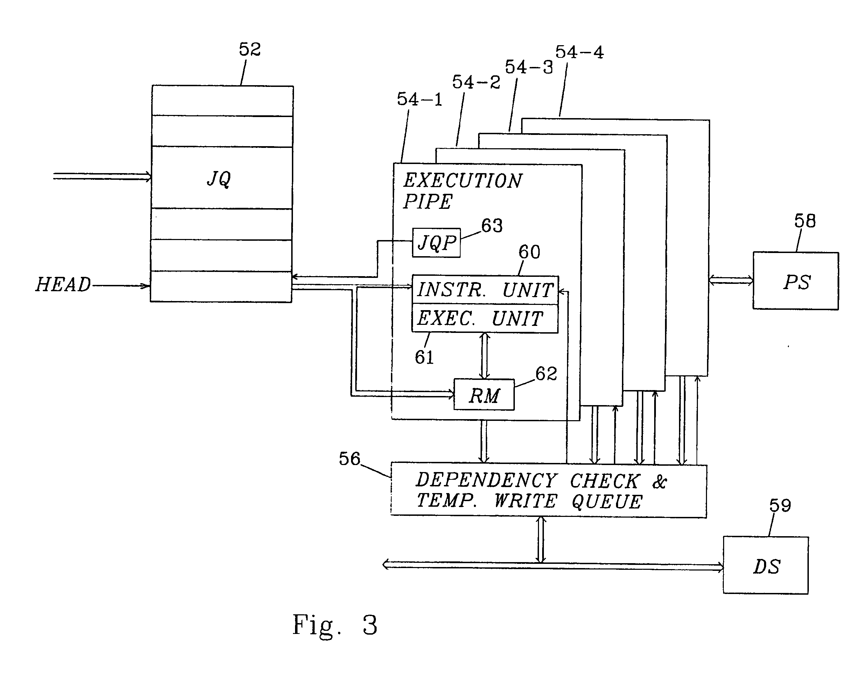

Fig. 3 is a schematic diagram of pertinent parts of the processor, in the form of the instruction-processing unit 50, of Fig. 2. The processor comprises a job queue 52, a number of execution pipelines 54-1 to 54-4 a combined dependency checking unit and temporary write queue 56, a program store 58 and a data store 59.

The job queue 52, in combination with appropriate control software or hardware, manages the protocol needed for assigning job signals to the execution pipelines 54, and removing job signals that have been committed. Preferably, the job queue 52 also manages the commit priority.

The job queue 52 is normally an ordinary queue with a number of storage positions. As an example, the job queue may be implemented in a common memory by logically dividing a predetermined part of the memory into a number of storage positions, each of which having its own individual memory address. In general, each storage position in the job queue 52 is divided into a number of fields, for example as described in Table I below.

**Table I**

| Field name | Description | Width (bits) |
|---|---|---|
| Valid | If set, the storage position contains a valid job | 1 |
| Taken | If set, the job signal has been taken by an execution pipeline | 1 |
| Job number | A monotonically increasing number is given to the job when received from the scheduling unit | 5 |
| Signal | The signal header and data | 128 |

The field 'Valid' is used for indicating whether a storage position contains a valid job signal or not. When a job signal is received from the scheduling unit 40, it is placed in the first free position of the job queue 52, i.e. a position in which the Valid flag is not set. The Valid flag is then set to indicate that the 'Signal' field now contains a valid job signal, and the position is occupied.

The field 'Taken' is used for indicating whether the job signal has been assigned to a pipeline or not. When a job signal in a storage position of the job queue 52 is assigned to an execution pipeline, the Taken flag for that position is set to indicate that the job signal has been assigned.

In general, jobs may be in the following states: Not_Started, Started and Finished. These states may be encoded in different ways, and it should be understood that the fields Valid, Taken and Finished of Table I is merely an example of one way of encoding these job states.

Preferably, the job queue 52 has a pointer HEAD that points out which storage position in the job queue that is in commit position. The job signal in the commit position has commit priority, and the execution pipeline handling this job signal is enabled to perform write-back to the data store 59 and send job signals to the scheduling unit 40. When a job signal is moved into commit position, the corresponding pipeline starts to commit all write operations and signal sendings for the job. When the job has been executed to completion and all writes and signal sendings have been committed, the position is released by clearing the Valid flag and the job queue 52 is stepped by conventional means to move a new position into commit position, thus successively assigning commit priority to the job signals in the job queue. The scheduling unit is informed that the job has been executed to completion and the job queue 52 is now ready to receive a new job signal from the scheduling unit.

An execution pipeline normally comprises circuitry for fetching instructions from a program store, decoding the instructions, executing the instructions and performing memory write back.

Each one of the execution pipelines 54-1 to 54-4 comprises an instruction unit 60, an execution unit 61, a register file memory (RM) 62 and a number of special purpose hardware registers, one of which is register for a job queue pointer (JQP) 63. The instruction unit 60 comprises a conventional program counter and circuitry for fetching and decoding instructions from the program store 58. The execution unit 61 comprises a conventional load store unit for loading data from and storing data in the data store 59, one or more arithmetic logic units (ALU), and means for performing write back (commit).

An example of a specific execution pipeline is the pipeline in the Ericsson AXE Digital Switching Systems.

### Job start

An example of how to start a new job will now be described briefly. First, an execution pipeline that is ready for execution requests a new job from the job queue 52. The job queue 52 is traversed by conventional means, and the Valid flags and the Taken flags of the storage positions in the job queue 52 are examined to find the next position which contains a valid and unallocated job signal. A pointer to the storage position of the unallocated job is transferred to the JQP register 63 of the requesting execution pipeline. The pointer may be in the form of a memory address to the storage position. The pipeline in question automatically reads its JQP register for the pointer to the next job signal, and subsequently copies the job signal given by the pointer into the execution pipeline to start executing the corresponding job. The Taken flag for that position of the job queue 52 is set. The header of the job signal includes a pointer to a program address that is copied into the program counter of the instruction unit 60. The data of the job signal includes operands required in the execution of the job and these operands are copied into the register file memory 62 and used by the execution unit 61 during execution of the job.

The instruction unit 60 fetches instructions from the program code in the program store starting at the address specified by the program counter, and then decodes the instructions. The execution unit 61 cooperates with the register file memory 62 to execute the decoded instructions received from the instruction unit 60. The operands required in the execution of the decoded instructions are loaded by the execution unit 61 from the register file memory 62. During execution of a job, the execution unit 61 writes to the write queue 56, and if the job has commit priority write back is performed to the memory 59 or I / O units.

If the dependency checking unit 56 detects a dependency between a speculatively executing job and the committed job, the speculatively executing job has to be flushed. At flush, the execution of the job in the speculatively executing pipeline is stopped by sending an interrupt signal I from the dependency checking unit 56 to the execution pipeline in question. Also, those entries in the dependency checking unit and the write queue that belong to the flushed job are invalidated.

### Job restart at flush

Now, an example of how to handle a flush will be described briefly. At flush, when a data dependency is detected for a job, execution of the job is normally interrupted in the pipeline, the job is put into a Not-Started state again, and those entries in the write queue and dependency-checking unit that belong to the flushed job are invalidated. The Finished flag and the Taken flag of the corresponding storage position in the job queue 52 are removed, and the job can then be restarted. A flushed job can be restarted directly from the job queue 52 since the job signal that corresponds to the flushed job is still buffered in the job queue, and the JQP register 63 in the execution pipeline holds a pointer to the storage position from which the job signal was copied. This is indicated in Fig. 3 by the arrow pointing from the JQP 63 towards a specific position in the job queue 52. Hence, the execution pipeline may once again copy the job signal from the storage position given by the pointer and restart execution of the job. Only job signals corresponding to jobs that have been committed are removed from the job queue 52.

A job to be flushed does not necessarily have to be interrupted if it is executing. However, in terms of performance, it is more advantageous to interrupt the job.

The functions for handling the job queue 52, such as writing information into the job queue fields and successively assigning commit priority to the job signals, are preferably controlled by software, e.g. in the form of a micro code instruction program or an assembler program. Other functions of the processing system, such as handling flushes and controlling the write queue, may also be implemented by software. It is of course possible to implement the above functions in hardware instead.

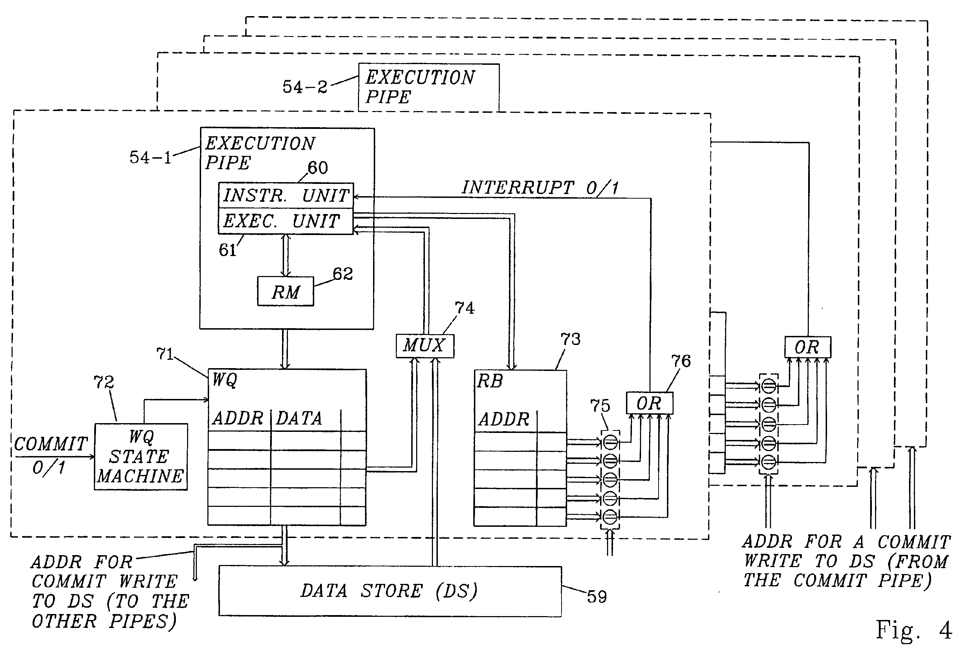

In the foregoing, the write queue has been described as a single centralized write queue for all execution pipelines. In the following, a realization example with distributed write queues will be described with reference to Fig. 4.

Fig. 4 is a schematic diagram of execution pipelines and circuitry for dependency checking according to an alternative embodiment of the invention. Only pertinent parts of the execution pipelines such as the instruction unit 60, the execution unit 61 and the register file memory 62 are illustrated in Fig. 4. As illustrated in Fig. 4, each one of the execution pipelines 54-1 to 54-4 is associated with a write queue 71, a write queue state machine 72 for controlling the write queue, a read buffer 73, a multiplexor 74, a comparison unit 75 and an OR-gate 76. This is indicated in Fig. 4 by the dashed rectangles, each of which surrounds a respective execution pipeline and its associated circuitry.

Instead of using a centralized write queue for all execution pipelines such as described in the patent application WO 88/02513, each pipeline now has its own write queue 71. Each write queue 71 has an address field for the write address to the data store 59, a data field and one or more auxiliary fields such as a valid field. The write queue 71 is controlled by a conventional state machine 72. In executing a job (speculatively or not), the execution pipeline writes the write address for the data store and the associated data to the write queue 71 connected to the pipeline. When a job gets commit priority, the entries in the write queue 71 are transferred from the write queue to the data store 59 under the control of the write queue state machine 72.

The read buffer 73 has an address field for read addresses for data store loads to the execution pipeline, and one or more auxiliary fields such as a valid field. When the execution unit 61 in an execution pipeline loads data from the data store 59, the execution unit 61 stores the read address or addresses in the read buffer 73 connected to the pipeline.

If data loaded by a speculatively executing job is subsequently modified by a committed job, a data dependency exists and the speculatively executed job has to be flushed and restarted. When the pipeline with commit priority writes to the data store 59, the write address is compared to all the read addresses stored in the read buffers associated with the speculatively executing pipelines to see if there are data dependencies between the committed job and the speculatively executed jobs. The comparison is performed in the comparison units 75 associated with the speculatively executing pipelines. Each comparison unit 75 includes a number of comparison elements, each of which compares a respective read address from the read buffer 73 to the data store write address for a commit write to the data store 59. The output from each comparison element in the comparison unit 75 is sent to the OR-gate 76 connected to the comparison unit 75, and the resulting output signal is forwarded as an interrupt signal (0/ 1) to the instruction unit 60 in the pipeline in question. This means that in order to set the interrupt signal to a high active state, it is sufficient if one of the read addresses in the read buffer 73 matches the address for a commit write. When the instruction unit 60 receives an interrupt signal, it instructs the execution unit 61 to stop execution of the current job.

The execution unit 61 can load data from the data store 59 or from the write queue 73 through the multiplexor 74. If the execution unit 61 is to load data from an address in the data store 59 and the execution unit 61 has previously written to write queue 71 on that very same address and the data for that address still is available in the write queue 71, the multiplexor 74 is controlled to enable loading from the write queue 71. Otherwise data is loaded from the data store 59.

It should be understood that the job signals are generally assigned to the execution pipelines in a round-robin fashion. In a round-robin, the pipelines can be regarded as arranged in a circular loop, which is traversed step by step. For example, this arrangement greatly simplifies the management of the commit position at the pipeline and write queue side. When the next job signal in the job queue is moved into commit position, the corresponding execution pipeline is straightforwardly identified as the next pipeline in the loop compared to the previous commit pipeline, and the results stored in the write queue dedicated to the identified pipeline are committed.

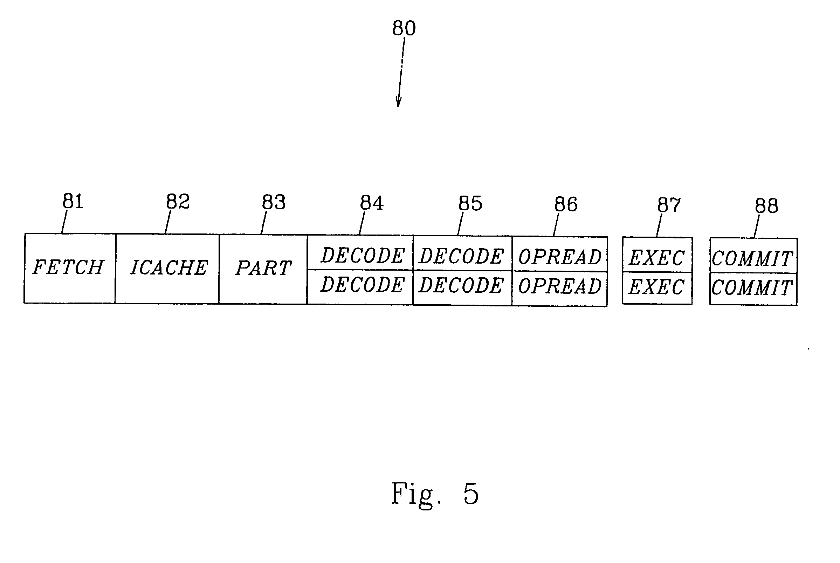

Fig. 5 is a schematic logical view of an example of an execution pipeline according to the invention. The execution pipeline 80 comprises a instruction fetch stage 81, an instruction cache stage 82, a partitioning stage 83, a number of decode stages 84 and 85, an operand read stage 86, an execution stage 87 and a commit stage 88.

In this particular example, the pipeline 80 fetches 128-bit memory words containing assembler instructions from the program store, and decodes them into one or several micro program instructions. The micro instructions are then executed out-of-order and committed in order. Preferably, the pipeline 80 is two-way super scalar, meaning that two instructions can be fetched, decoded and executed in parallel.

The assembler instruction execution starts with generating the next instruction address and fetching, during the fetch stage 81, a 128-bit cache line from the instruction level cache of the program store 59. The cache line is partitioned into instructions during the partitioning stage 83. The instructions are then decoded into one or several micro instructions in the decode stages 84, 85. The operand read stage 86 receives the decoded micro instructions and prepares them for execution. The micro instructions are passed on to a set of execution units comprising ALU units, a data store read/write unit and a jump unit, and executed during the execute stage 87. A micro instruction executes when all its operands are available, independent of the order specified by the assembler and micro program code. The result is however not committed, written back to the register file memory, hardware registers or to the data store until all previous instructions has done so.

When application software already designed for execution on a single processing unit, or processor, is executed on multiple processing units in parallel, dependencies may occur since the jobs or tasks operate towards a shared memory space. According to the invention, such dependencies between jobs executed in parallel by different processing units are resolved by speculative execution and dependency checks.

The embodiments described above are merely given as examples, and it should be understood that the present invention is not limited thereto.

For example, the job queue 52 does not necessarily have to be arranged in the IPU 50. It is possible to incorporate the job queue 52 into the scheduling unit 40. Moreover, the job queue functionality can be integrated into the job buffers 44 of the scheduling unit 40 such that the job buffers act as a job queue.

In addition, a job signal in the job queue 52 can be removed from the queue as soon as the job signal gets commit priority, instead of waiting until the job has been completely committed.

Although the invention mainly has been described from the viewpoint that the protocol for assigning job signals to the processing units, keeping track of the job signals and managing the commit priority is performed by the job signal queue and its associated control functionality, it should be understood that it is also possible to manage this protocol from the execution pipeline side.

In the foregoing, the execution pipes have been described as being separate entities, each having its own private resources for instruction execution. In general, however, many resources in an execution pipeline will not be fully utilized in the instruction execution. A resource can then be shared between the pipes, giving an execution pipe access to the resource either on request or in a time-multiplexed manner. A technique for implementing a high degree of resource sharing is simultaneous multithreading. In simultaneous multithreading almost all resources are shared and the resources private to each pipeline are limited to a private program counter and a private mapping between logical register numbers in the instructions and physical registers.

It should also be understood that the term "processing unit" is not limited to specialized hardware but also includes other types of processing units such as standard off-the-shelf microprocessors. In the case of standard microprocessors, dependency checking is normally implemented by instrumenting read and write instructions with extra code in the application software. Preferably, support for flushing is implemented in the application software and performed by the operating system or the virtual machine. If application software written for a single-processor system is to be migrated to and reused in a standard multiprocessor environment, the application software can be transformed via recompilation or equivalent. For example, a sequentially programmed application software may be automatically transformed by adding appropriate code for supporting speculative execution, including code for dependency checking and code for storing a copy of modified variables to enable proper flush or roll-back of a job, and then recompiling the software. The operating system or virtual machine of the standard multiprocessor system may also be modified to give support for speculative execution. For example, if a dependency is detected when executing code for dependency checking, the control may be transferred to the operating system/virtual machine which flushes the relevant job. Dependency checking has been described with reference to an address comparison method. Alternatively, however, dependency checking may also be accomplished by a marker method, where each processing unit marks the use of variables in the main memory, and dependency collisions are detected based on the markings.

Further modifications, changes and improvements which retain the basic underlying principles disclosed and claimed herein are within the scope of the invention.

## Claims

1. A processing system (30) for a service network (10), said service network (10) providing services to a plurality of users connected to said network, said processing system comprising:
- a first processor (SPU) including a scheduling unit (40) for scheduling job signals corresponding to jobs that form part of independent services requested by said users; and
- a second processor (IPU, 50), connected to said first processor (SPU), said second processor comprising:
- a job signal queue (52) having a number of storage positions for
storing job signals received from said scheduling unit (40), each one of said job signals being stored in a respective storage position of said job signal queue (52); **characterised in** - a plurality of parallel processing units (54) for independently
processing job signals from different storage positions in said job signal queue (52) to execute different jobs in parallel, one of said parallel jobs being executed non-speculatively and the remaining of said parallel jobs being executed speculatively, wherein each job comprises a stream of instructions, wherein each processing unit (54) is associated with a register (63) for storing a pointer to the storage position in said job signal queue (52) that holds the job signal to be processed by the processing unit, and the processing unit is operable to copy the job signal given by the pointer from the job signal queue (52) into the processing unit to start executing the corresponding job;
- means (56) for checking for possible dependencies between speculative jobs and the non-speculative job;
- means for flushing, if a dependency is detected for a speculative job, the speculative job, and for restarting execution of the flushed job, wherein the job signal that corresponds to the flushed job is still buffered in the job signal queue (52) and the register (63) for storing a pointer holds the pointer to the storage position from which the job signal was copied so that the flushed job can be restarted directly by letting the processing unit once again copy the job signal from the storage position given by the pointer and restart execution of the job.

2. The processing system according to claim 1, wherein said processing units (54) are in the form of execution pipelines.

3. The processing system according to claim 1, further comprising:
- means for indicating, for each storage position in said job signal queue (52) in which a job signal is stored, whether the job signal has been allocated to a processing unit or not;
- means for traversing said job signal queue (52) to find an unallocated job signal;
- means for transferring a pointer to the storage position of the unallocated job signal into the register associated with a job requesting processing unit, said job requesting unit reading its associated register for the pointer and copying the job signal given by the pointer into the processing unit to start executing the corresponding job.

4. The processing system according to claim 1 further comprising means for successively assigning commit priority to said job signals, one job signal at a time according to a commit order, a job corresponding to a job signal having commit priority being enabled for non-speculative execution including write back to said memory system (57).

5. The processing system according to claim 4, further comprising:
- means (56) for temporarily storing the results of each speculatively executed job;
- means for retrieving, for the job signal to which commit priority is assigned, the temporarily stored results of the corresponding job and performing write-back of the retrieved results to said memory system (57).

6. The processing system according to claim 5, wherein said means for flushing and restarting includes:
- means for identifying the temporarily stored results of said speculative job; and
- means for invalidating said identified results.

7. The processing system according to claim 4, wherein said means for assigning commit priority comprises means for pointing out which storage position in said job signal queue (52) that is in commit position, thus assigning commit priority to job signal of that storage position, and means for stepping said job signal queue (52) to move a new storage position into said commit position.

8. The processing system according to claim 4, further comprising at least one write queue (56; 71) for temporarily storing the results of jobs executed by said processing units (54), and means for transferring the results of a job to which commit priority is assigned from said write queue to an external unit such as a memory system (57) connected to said processor.

9. The processing system according to claim 8, wherein said means for flushing and restarting includes:
- means for interrupting execution in the corresponding processing unit;
- means for invalidating those results in said write queue (71) that belong to the flushed job; and
- means for invalidating those entries in said means (56) for checking dependencies that belong to the flushed job.

10. The processing system according to claim 8, wherein each processing unit (54) is connected to a respective write queue (71) for temporarily storing the results of the job executed by the processing unit (54), the results of the job being transferred to said external unit when commit priority is assigned to the job.

11. The processing system according to claim 10, wherein the memory system write address for a processing unit with commit priority is broadcasted to each one of the speculatively executing processing units for dependency-checking with the memory system read addresses of said speculatively executing processing units.

12. The processing system according to claim 1, wherein each job signal comprises input operands necessary for execution of the corresponding job.

13. The processing system according to claim 1, further comprising a data store (59) and a program store (58), and wherein each job signal comprises a header and a body, said header including a pointer to software code in said program store (58) and said body including operands necessary for execution of the corresponding job.

14. The processing system according to claim 1, wherein said service network (10) is a telecommunication network, and said independent services are telecommunication services.

15. The processing system according to claim 1, wherein said service network (10) includes a host computer (28) and a number of user terminals, said host computer (28) being provided with a data base system and said user terminals being operable for requesting independent data base services from said data base system.

16. The processing system according to claim 1, wherein at least a subset of said job signals in said job signal queue (52) is generated in response to service requests by said users.

17. The processing system according to claim 1, wherein said processor is event-driven, and service requests by said users are events, each of which initiates one or more jobs to be executed.

## Patentansprüche

1. Verarbeitungssystem (30) für ein Dienstnetzwerk (10), wobei das Dienstnetzwerk (10) einer Vielzahl an Nutzern, welche mit dem Netzwerk verbunden sind, Dienste bereitstellt, wobei das Verarbeitungssystem umfasst:
- einen ersten Prozessor (SPU), welcher eine Planeinheit (40) zum Planen von Jobsignalen umfasst, welche Jobs entsprechen, welche Teil von unabhängigen Diensten bilden, welche von den Benutzern angefordert werden; und
- einen zweiten Prozessor (IPU, 50), welcher mit dem ersten Prozessor (SPU) verbunden ist, wobei der zweite Prozessor umfasst:
- eine Jobsignal-Warteschlange (52) mit einer Zahl an Speicherpositionen zum Speichern von Jobsignalen, welche aus der Planeinheit (40) empfangen werden, wobei jedes der Jobsignale in einer jeweiligen Speicherposition der Jobsignal-Warteschlange (52) gespeichert wird;
**gekennzeichnet durch**:
- eine Vielzahl an Parallel-Verarbeitungseinheiten (54) zum unabhängigen Verarbeiten von Jobsignalen von verschiedenen Speicherpositionen in der Jobsignal-Warteschlange (52) um verschiedene Jobs parallel auszuführen, wobei einer der parallelen Jobs nichtspekulativ ausgeführt wird und die übrigen der parallelen Jobs spekulativ ausgeführt werden, wobei jeder Job einen Befehlsstrom umfasst, wobei jede Verarbeitungseinheit (54) einem Register (63) zugehörig ist zum Speichern eines Zeiger zu der Speicherposition in der Jobsignal-Warteschlange (52), welche das Jobsignal hält, welches von der Verarbeitungseinheit verarbeitet werden soll, und die Verarbeitungseinheit betreibbar ist, das Jobsignal, welches **durch** den Zeiger von der Jobsignal-Warteschlange (52) gegeben wird, in die Verarbeitungseinheit zu kopieren, um mit dem Ausführen des entsprechenden Jobs zu starten;
- Mittel (56) zum Prüfen nach möglichen Abhängigkeiten zwischen spekulativen Jobs und dem nicht-spekulativen Job;
- Mittel zum Flushen, falls eine Abhängigkeit für einen spekulativen Job detektiert wird, des spekulativen Jobs, und zum Neustarten der Ausführung des geflushten Jobs, wobei das Jobsignal, welches dem geflushten Job entspricht, noch in der Jobsignal-Warteschlange (52) gepuffert ist und das Register (63) zum Speichern eines Zeigers den Zeiger zu der Speicherposition hält, von welcher das Jobsignal kopiert wurde, so dass der geflushte Job direkt neugestartet werden kann, indem ermöglicht wird, dass die Verarbeitungseinheit noch einmal das Jobsignal aus der Speicherposition, welche durch den Zeiger gegeben wird, kopiert und die Ausführung des Jobs neustartet.

2. Verarbeitungssystem nach Anspruch 1, wobei die Verarbeitungseinheiten (54) in der Art von Ausführungspipelines sind.

3. Verarbeitungssystem nach Anspruch 1, welches ferner umfasst:
- Mittel zum Anzeigen, für jede Speicherposition in der Jobsignal-Warteschlange (52), in welcher ein Jobsignal gespeichert ist, ob das Jobsignal einer Verarbeitungseinheit zugewiesen wurde oder nicht;
- Mittel zum Durchgehen der Jobsignal-Warteschlange (52) zum Finden eines nicht-zugewiesenen Jobsignals;
- Mittel zum Transferieren eines Zeigers zu der Speicherposition des nicht-zugewiesenen in das Register, welches einer Job-anfordernden-Verarbeitungseinheit zugehörig ist, wobei die Job-anfordernde Verarbeitungseinheit ihr zugehöriges Register für den Zeiger liest und das Jobsignal, welches durch den Zeiger gegeben wird, in die Verarbeitungseinheit kopiert um eine Ausführung des entsprechenden Jobs zu starten.

4. Verarbeitungssystem nach Anspruch 1, welches ferner Mittel zum sukzessiven Zuweisen von Commit-Priorität an die Jobsignale, ein Jobsignal nach dem anderen gemäß einer Commit-Reihenfolge, wobei ein Job, welcher einem Jobsignal mit Commit-Priorität entspricht, für eine nicht-spekulative Ausführung, welche Zurückschreiben an das Speichersystem (57) umfasst, freigeben ist.

5. Verarbeitungssystem nach Anspruch 4, welches ferner umfasst:
- Mittel (56) zum temporären Speichern der Ergebnisse jedes spekulativ ausgeführten Jobs;
- Mittel zum Abrufen, für das Jobsignal an welches Commit-Priorität zugewiesen wird, der temporär gespeicherten Ergebnisse des entsprechenden Jobs und Durchführen von Zurückschreiben der abgerufenen Ergebnisse an das Speichersystem (57).

6. Verarbeitungssystem nach Anspruch 5, wobei die Mittel zum Flushen und Neustarten umfassen:
- Mittel zum Identifizieren der temporär gespeicherten Ergebnisse des spekulativen Jobs; und
- Mittel zum Ungültig-Machen der identifizierten Ergebnisse.

7. Verarbeitungssystem nach Anspruch 4, wobei die Mittel zum Zuweisen von Commit-Priorität Mittel zum Aufzeigen, welche Speicherposition in der Jobsignalwarteschlange (52) sich in einer Commit-Position befindet, umfassen, wobei somit Commit-Priorität einem Jobsignal der Speicherposition zugewiesen wird, und Mittel zum Steppen der Jobsignalwarteschlange (52), um eine neue Speicherposition in die Commit-Position zu bewegen.

8. Verarbeitungssystem nach Anspruch 4, welches ferner mindestens eine Schreib-Warteschlange (56; 71) zum temporären Speichern der Ergebnisse von Jobs umfasst, welche durch die Verarbeitungseinheiten (54) ausgeführt werden, und Mittel zum Transferieren der Ergebnisse eines Jobs, zu welchem eine Commit-Priorität zugewiesen wird, von der Schreib-Warteschlange zu einer externen Einheit, wie einem Speichersystem (57), welches mit dem Prozessor verbunden ist.

9. Verarbeitungssystem nach Anspruch 8, wobei die Mittel zum Flushen und Neustarten umfassen:
- Mittel zum Unterbrechen einer Ausführung in der entsprechenden Verarbeitungseinheit;
- Mittel zum Ungültig-Machen der Ergebnisse in der Schreib-Warteschlange (71), die zu dem geflushten Job gehören; und
- Mittel zum Ungültig-Machen der Einträge in dem Mittel (56) zum Prüfen von Abhängigkeiten, die zu dem geflushten Job gehören.

10. Verarbeitungssystem nach Anspruch 8, wobei jede Verarbeitungseinheit (54) mit einer jeweiligen Schreib-Warteschlange (71) verbunden ist, zum temporären Speichern der Ergebnisse des Jobs, welcher von der Verarbeitungseinheit (54) ausgeführt wird, wobei die Ergebnisse des Jobs zu der externen Einheit transferiert werden, wenn dem Job eine Commit-Priorität zugewiesen wird.

11. Verarbeitungssystem nach Anspruch 10, wobei die Speichersystem-Schreibadresse für eine Verarbeitungseinheit mit Commit-Priorität an jede der spekulativ ausführenden Verarbeitungseinheiten übertragen wird zum Prüfen von Abhängigkeiten mit der Speichersystem-Leseadressen der spekulativ ausführenden Verarbeitungseinheiten.

12. Verarbeitungssystem nach Anspruch 1, wobei jedes Jobsignal Eingabeoperanden umfasst, welche für eine Ausführung des entsprechenden Jobs nötig sind.

13. Verarbeitungssystem nach Anspruch 1, welches ferner einen Datenspeicher (59) und einen Programmspeicher (58) umfasst, und wobei jedes Jobsignal einen Header und einen Body umfasst, wobei der Header einen Zeiger zu Softwarecode in dem Programmspeicher (58) umfasst, und der Body Operanden umfasst, welche für eine Ausführung des entsprechenden Jobs nötig sind.

14. Verarbeitungssystem nach Anspruch 1, wobei das Dienstnetzwerk (10) ein Telekommunikationsnetzwerk ist, und die unabgängigen Dienste Telekommunikationsdienste sind.

15. Verarbeitungssystem nach Anspruch 1, wobei das Dienstnetzwerk (10) einen Host-Computer (28) umfasst und eine Zahl an Benutzer-Endgeräten, wobei dem Host-Computer (28) ein Datenbanksystem bereitgestellt wird und die Benutzer-Endgeräte betreibbar sind, unabhängige Datenbankdienste aus dem Datenbanksystem anzufordern.

16. Verarbeitungssystem nach Anspruch 1, wobei wenigstens eine Untergruppe an Jobsignalen in der Jobsignalwarteschlange (52) ansprechend auf Dienstanforderungen von den Benutzern erzeugt werden.

17. Verarbeitungssystem nach Anspruch 1, wobei der Prozessor ereignisgesteuert ist, und Dienstanforderungen durch die Benutzer Ereignisse sind, von denen jedes einen oder mehr Jobs initiiert, die ausgeführt werden sollen.

## Revendications

1. Système de traitement (30) pour un réseau (10) de service, ledit réseau (10) de service fournissant des services à une pluralité d'utilisateurs connectés audit réseau, ledit système de traitement comprenant :
- un premier processeur (SPU) comportant une unité de planification (40) conçue pour planifier des signaux de tâches correspondant à des tâches qui forment une partie de services indépendants demandés par lesdits utilisateurs ; et
- un deuxième processeur (IPU, 50), connecté audit premier processeur (SPU), ledit deuxième processeur comprenant :
- une file d'attente (52) de signaux de tâches ayant un nombre de positions de stockage pour stocker des signaux de tâches reçus de ladite unité de planification (40), chacun desdits signaux de tâches étant stocké dans une position de stockage respective de ladite file d'attente (52) de signaux de tâches ;
**caractérisé en ce que**
- une pluralité d'unités de traitements parallèles (54) conçue pour traiter indépendamment des signaux de tâches de différentes positions de stockage dans ladite file d'attente (52) de signaux de tâches pour exécuter différentes tâches en parallèle, l'une desdites tâches parallèles étant exécutée de manière non spéculative et le reste desdites tâches parallèles étant exécuté de manière spéculative, où chaque tâche comprend un flux d'instructions, où chaque unité de traitement (54) est associée à un registre (63) pour stocker un pointeur à la position de stockage dans ladite file d'attente (52) de signaux de tâches qui maintient le signal de tâche devant être traité par l'unité de traitement, et l'unité de traitement peut fonctionner pour copier le signal de tâche fourni par le pointeur de la file d'attente (52) de signaux de tâches dans l'unité de traitement pour commencer l'exécution de la tâche correspondante ;
- un moyen (56) destiné à vérifier des dépendances possibles entre des tâches spéculatives et la tâche non spéculative ;
- un moyen destiné à supprimer la tâche spéculative, si une dépendance est détectée pour une tâche spéculative, et à recommencer l'exécution de la tâche supprimée, où le signal de tâche qui correspond à la tâche supprimée est toujours mis en mémoire tampon dans la file d'attente (52) de signaux de tâches et le registre (63) pour stocker un pointeur maintient le pointeur sur la position de stockage à partir de laquelle le signal de tâche a été copié de sorte que la tâche supprimée puisse recommencer directement en laissant l'unité de traitement copier de nouveau le signal de tâche à partir de la position de stockage fournie par le pointeur et recommencer l'exécution de la tâche.

2. Système de traitement selon la revendication 1, dans lequel lesdites unités de traitement (54) sont sous forme de pipelines d'exécution.

3. Système de traitement selon la revendication 1, comprenant en plus :
- un moyen destiné à indiquer, pour chaque position de stockage dans ladite file d'attente (52) de signaux de tâches dans laquelle un signal de tâche est stocké, si le signal de tâche a été attribué à une unité de traitement ou non ;
- un moyen destiné à traverser ladite file d'attente (52) de signaux de tâches à la recherche d'un signal de tâche non attribué ;
- un moyen destiné à transférer un pointeur à la position de stockage du signal de tâche non attribué dans le registre associé à une unité de traitement de requêtes de tâches, ladite unité de requêtes de tâches lisant son registre associé pour le pointeur et copiant le signal de tâche fourni par le pointeur dans l'unité de traitement pour commencer l'exécution de la tâche correspondante.

4. Système de traitement selon la revendication 1, comprenant en plus un moyen pour attribuer successivement une priorité de validation auxdits signaux de tâches, un signal de tâche à la fois selon un ordre de validation, une tâche correspondant à un signal de tâche ayant une priorité de validation qui est habilitée pour exécution non spéculative comportant une écriture différée audit système (57) de mémoire.

5. Système de traitement selon la revendication 4, comprenant en plus :
- un moyen (56) destiné à stocker temporairement les résultats de chaque tâche exécutée de manière spéculative ;
- un moyen destiné à récupérer, pour le signal de tâche auquel une priorité de validation est attribuée, les résultats stockés temporairement de la tâche correspondante et à exécuter une écriture différée des résultats récupérés audit système (57) de mémoire.

6. Système de traitement selon la revendication 5, dans lequel ledit moyen de suppression et de recommencement comporte :
- un moyen destiné à identifier les résultats stockés temporairement de ladite tâche spéculative ; et
- un moyen destiné à invalider lesdits résultats identifiés.

7. Système de traitement selon la revendication 4, dans lequel ledit moyen destiné à attribuer une priorité de validation comprend un moyen destiné à indiquer la position de stockage dans ladite file d'attente (52) de signaux de tâches qui se trouve dans la position de validation, attribuant ainsi une priorité de validation à un signal de tâche de cette position de stockage, et un moyen destiné à faire avancer ladite file d'attente (52) de signaux de tâches afin de déplacer une nouvelle position de stockage dans ladite position de validation.

8. Système de traitement selon la revendication 4, comprenant en plus au moins une file d'attente (56 ; 71) d'écriture pour stocker temporairement les résultats des tâches exécutées par lesdites unités de traitement (54), et un moyen destiné à transférer les résultats d'une tâche à laquelle une priorité de validation est attribuée de ladite file d'attente d'écriture à une unité externe telle qu'un système (57) de mémoire connecté audit processeur.

9. Système de traitement selon la revendication 8, dans lequel ledit moyen de suppression et de recommencement comporte :
- un moyen destiné à interrompre l'exécution dans l'unité de traitement correspondante ;
- un moyen destiné à invalider les résultats dans ladite file d'attente (71) d'écriture qui appartiennent à la tâche supprimée ; et
- un moyen destiné à invalider les entrées dans ledit moyen (56) de vérification de dépendances qui appartiennent à la tâche supprimée.

10. Système de traitement selon la revendication 8, dans lequel chaque unité de traitement (54) est connectée à une file d'attente (71) d'écriture respective pour stocker temporairement les résultats de la tâche exécutée par l'unité de traitement (54), les résultats de la tâche étant transférés à ladite unité externe lorsqu'une priorité de validation est attribuée à la tâche.

11. Système de traitement selon la revendication 10, dans lequel l'adresse d'écriture du système de mémoire pour une unité de traitement avec une priorité de validation est diffusée à chacune des unités de traitement d'exécution de manière spéculative pour une vérification de dépendance avec les adresses de lecture du système de mémoire desdites unités de traitement d'exécution spéculative.

12. Système de traitement selon la revendication 1, dans lequel chaque signal de tâche comprend des opérandes d'entrée nécessaires pour l'exécution de la tâche correspondante.

13. Système de traitement selon la revendication 1, comprenant en plus un stockage (59) de données et un stockage (58) de programmes, et où chaque signal de tâche comprend un en-tête et un corps, ledit en-tête comportant un pointeur sur un code logiciel dans ledit stockage (58) de programmes et ledit corps comportant des opérandes nécessaires pour l'exécution de la tâche correspondante.

14. Système de traitement selon la revendication 1, dans lequel ledit réseau (10) de service est un réseau de télécommunication, et lesdits services indépendants sont des services de télécommunication.

15. Système de traitement selon la revendication 1, dans lequel ledit réseau (10) de service comporte un ordinateur hôte (28) et un nombre de terminaux utilisateurs qui sont opérationnels pour demander des services de base de données indépendants à partir du système de base de données.

16. Système de traitement selon la revendication 1, dans lequel au moins un sous-ensemble desdits signaux de tâches dans ladite file d'attente (52) de signaux de tâches est généré en réponse à des demandes de service par lesdits utilisateurs.

17. Système de traitement selon la revendication 1, dans lequel ledit processeur est commandé par des évènements, et des demandes de service par lesdits utilisateurs sont des évènements, dont chacun initie une ou plusieurs tâches à exécuter.
